# EUROPEAN PATENT APPLICATION

(11) **EP 4 606 931 A1**
(43) Date of publication of application: **27.08.2025**
(21) Application number: 23878948.1
(22) Date of filing: 28.09.2023
(51) Int. Cl.: C25B 1/04, C25B 15/02, C25B 15/023, G05D 16/20

(54) **HYDROGEN PRODUCTION CONTROL SYSTEM AND METHOD, AND STORAGE MEDIUM**

(30) Priority: 17.10.2022 CN 202211269276
(71) Applicant: Wuxi Longi Hydrogen Technology Co., Ltd., Wuxi, Jiangsu 214135 (CN)
(72) Inventor: JIANG, Chao, Wuxi, Jiangsu 214135 (CN); SHEN, Hong, Wuxi, Jiangsu 214135 (CN); ZHENG, Lianhuan, Wuxi, Jiangsu 214135 (CN); ZANG, Lili, Wuxi, Jiangsu 214135 (CN)
(74) Representative: Pfenning, Meinig & Partner mbB
(86) International application number: PCT/CN2023/122811
(87) International publication number: WO 2024/082956

(57) **Abstract**

The present disclosure relates to a hydrogen production control system and method, and a storage medium. The hydrogen production control system includes a safety controller, a first valve and a second valve respectively connected to the safety controller, a hydrogen-production controller, a third valve and a fourth valve respectively connected to the hydrogen-production controller, an oxygen-side gas-liquid separation apparatus respectively in communication with the first valve and the third valve, and a hydrogen-side gas-liquid separation apparatus respectively in communication with the second valve and the fourth valve, where the hydrogen-production controller is configured to control a pressure in the oxygen-side gas-liquid separation apparatus through the third valve, and control a liquid level in the hydrogen-side gas-liquid separation apparatus through the fourth valve; and the safety controller is configured to: when a hydrogen production parameter is greater than or equal to a preset parameter alarm threshold, adjust the pressure in the oxygen-side gas-liquid separation apparatus through the first valve, and/or adjust the liquid level in the hydrogen-side gas-liquid separation apparatus through the second valve. **In** this way, system safety is effectively ensured, and production efficiency is improved.

## Description

### CROSS-REFERENCE TO RELATED APPLICATIONS

The present disclosure claims priority to Chinese Patent Application No. 202211269276.0, filed with the China National Intellectual Property Administration on October 17, 2022, and entitled "HYDROGEN PRODUCTION CONTROL SYSTEM AND METHOD, AND STORAGE MEDIUM", which is incorporated by reference in its entirety.

### TECHNICAL FIELD

The present disclosure relates to the field of hydrogen production control, and specifically, to a hydrogen production control system and method, and a storage medium.

### BACKGROUND

A water electrolysis hydrogen production and separation system is a pressurized system device, and has a risk of explosion due to mixing of hydrogen and oxygen. How to ensure safe operation of the hydrogen production system is crucial. In the related art, a distributed control system (DCS) and a programmable logic controller (PLC) are usually used in a hydrogen-production controller of a hydrogen production system, to control operation of the hydrogen production system and also implement alarm and interlocking protection functions, which can ensure system safety to some extent, but there is still a probability of failure.

A safety instrumented system (SIS) safety controller generally implements alarm and interlocking functions, which is cutting off a power supply in an interlocking manner and making some valves in default safe positions, which is considered as danger elimination. However, actually, because the SIS safety controller usually does not participate in control execution (such as a control valve), when a hydrogen-production controller and a control circuit thereof fail, the alarm and interlocking functions cannot completely prevent occurrence of a danger. For example, a danger of liquid mixing between oxygen and hydrogen sides cannot be prevented, and the liquid mixing between the oxygen and hydrogen sides may cause mixing of hydrogen and oxygen and further, a risk of explosion.

### SUMMARY

To resolve the foregoing problem, this application provides a hydrogen production control system and method, and a storage medium.

According to a first aspect, this application provides a hydrogen production control system. The hydrogen production control system includes a safety controller, a first valve and a second valve respectively connected to the safety controller, a hydrogen-production controller, a third valve and a fourth valve respectively connected to the hydrogen-production controller, an oxygen-side gas-liquid separation apparatus respectively in communication with the first valve and the third valve, and a hydrogen-side gas-liquid separation apparatus respectively in communication with the second valve and the fourth valve, where the hydrogen-production controller is configured to control a pressure in the oxygen-side gas-liquid separation apparatus through the third valve, and control a liquid level in the hydrogen-side gas-liquid separation apparatus through the fourth valve; and the safety controller is configured to: when a hydrogen production parameter is greater than or equal to a preset parameter alarm threshold, adjust the pressure in the oxygen-side gas-liquid separation apparatus through the first valve, and/or adjust the liquid level in the hydrogen-side gas-liquid separation apparatus through the second valve.

Optionally, the hydrogen production parameter includes the pressure in the oxygen-side gas-liquid separation apparatus; the hydrogen-production controller is configured to: when the pressure in the oxygen-side gas-liquid separation apparatus is greater than or equal to a preset pressure alarm threshold, control the system to halt hydrogen production; and the safety controller is configured to: when the pressure in the oxygen-side gas-liquid separation apparatus is greater than or equal to the preset pressure alarm threshold, control, in an interlocking manner, the system to halt hydrogen production, and adjust the pressure in the oxygen-side gas-liquid separation apparatus through the first valve, to depressurize the oxygen-side gas-liquid separation apparatus.

Optionally, the hydrogen production control system further includes a first pressure transmitter located on the oxygen-side gas-liquid separation apparatus, and a second pressure transmitter located between the first valve and the oxygen-side gas-liquid separation apparatus, where the safety controller is connected to at least the second pressure transmitter, and optionally, connected to the first pressure transmitter; and the hydrogen-production controller is connected to at least the first pressure transmitter, and optionally, connected to the second pressure transmitter. Optionally, the second pressure transmitter may alternatively be located on the hydrogen-side gas-liquid separation apparatus, or located between the second valve and the hydrogen-side gas-liquid separation apparatus.

Optionally, the hydrogen production parameter further includes a liquid level difference between the oxygen-side gas-liquid separation apparatus and the hydrogen-side gas-liquid separation apparatus; and the hydrogen-production controller is configured to: when the liquid level difference is greater than or equal to a first preset liquid-level-difference alarm threshold, control the system to halt hydrogen production; and the safety controller is configured to: when the liquid level difference is greater than or equal to the first preset liquid-level-difference alarm threshold, control, in an interlocking manner, the system to halt hydrogen production, and adjust the pressure in the oxygen-side gas-liquid separation apparatus through the first valve, to reduce the liquid level difference; or adjust the liquid level in the hydrogen-side gas-liquid separation apparatus through the second valve, to reduce the liquid level difference.

Optionally, the hydrogen production control system further includes one or more liquid level transmitters connected to the oxygen-side gas-liquid separation apparatus, and one or more liquid level transmitters connected to the hydrogen-side gas-liquid separation apparatus; the safety controller is connected to some or all of the liquid level transmitters on the oxygen-side gas-liquid separation apparatus respectively, and is connected to some or all of the liquid level transmitters on the hydrogen-side gas-liquid separation apparatus respectively; the hydrogen-production controller is connected to some or all of the liquid level transmitters on the oxygen-side gas-liquid separation apparatus respectively, and is connected to some or all of the liquid level transmitters on the hydrogen-side gas-liquid separation apparatus respectively; the plurality of liquid level transmitters connected to the oxygen-side gas-liquid separation apparatus are configured to determine a liquid level in the oxygen-side gas-liquid separation apparatus; and the plurality of liquid level transmitters connected to the hydrogen-side gas-liquid separation apparatus are configured to determine the liquid level in the hydrogen-side gas-liquid separation apparatus.

Optionally, the system further includes a fifth valve connected between the oxygen-side gas-liquid separation apparatus and the hydrogen-side gas-liquid separation apparatus, where the fifth valve is connected to the safety controller; and the safety controller is configured to: when the liquid level difference is greater than or equal to a second preset liquid-level-difference alarm threshold, control the fifth valve to close, where the second preset liquid-level-difference alarm threshold is greater than the first preset liquid-level-difference alarm threshold.

According to a second aspect, this application further provides a hydrogen production control method, applicable to a hydrogen production control system. The hydrogen production control system includes a safety controller, a first valve and a second valve respectively connected to the safety controller, a hydrogen-production controller, a third valve and a fourth valve respectively connected to the hydrogen-production controller, an oxygen-side gas-liquid separation apparatus respectively in communication with the first valve and the third valve, and a hydrogen-side gas-liquid separation apparatus respectively in communication with the second valve and the fourth valve, where the method includes: controlling, by the hydrogen-production controller, a pressure in the oxygen-side gas-liquid separation apparatus through the third valve when a hydrogen production parameter is less than a preset parameter alarm threshold, to cause the pressure in the oxygen-side gas-liquid separation apparatus to be less than a preset pressure alarm threshold; controlling a liquid level in the hydrogen-side gas-liquid separation apparatus through the fourth valve, to cause a liquid level difference between the oxygen-side gas-liquid separation apparatus and the hydrogen-side gas-liquid separation apparatus to be less than a first preset liquid-level-difference alarm threshold, where the safety controller is configured to receive the hydrogen production parameter, the first valve and the second valve are in a closed state, and the hydrogen production parameter includes the pressure in the oxygen-side gas-liquid separation apparatus and the liquid level difference between the oxygen-side gas-liquid separation apparatus and the hydrogen-side gas-liquid separation apparatus; and when the hydrogen production parameter is greater than or equal to the preset parameter alarm threshold, controlling, by the hydrogen-production controller, the system to halt hydrogen production; and controlling, by the safety controller in an interlocking manner, the system to halt hydrogen production, adjusting the pressure in the oxygen-side gas-liquid separation apparatus through the first valve, and/or adjusting the liquid level in the hydrogen-side gas-liquid separation apparatus through the second valve.

Optionally, the hydrogen production parameter includes the pressure in the oxygen-side gas-liquid separation apparatus; and the method further includes:
when the pressure in the oxygen-side gas-liquid separation apparatus is greater than or equal to the preset pressure alarm threshold, controlling, by the hydrogen-production controller, the system to halt hydrogen production; and
when the pressure in the oxygen-side gas-liquid separation apparatus is greater than or equal to the preset pressure alarm threshold, controlling, by the safety controller in an interlocking manner, the system to halt hydrogen production, and adjusting the pressure in the oxygen-side gas-liquid separation apparatus through the first valve, to depressurize the oxygen-side gas-liquid separation apparatus.

Optionally, the hydrogen production parameter further includes the liquid level difference between the oxygen-side gas-liquid separation apparatus and the hydrogen-side gas-liquid separation apparatus; and the method further includes:
when the liquid level difference is greater than or equal to the first preset liquid-level-difference alarm threshold, controlling, by the hydrogen-production controller, the system to halt hydrogen production; and
when the liquid level difference is greater than or equal to the first preset liquid-level-difference alarm threshold, controlling, by the safety controller in an interlocking manner, the system to halt hydrogen production, and adjusting the pressure in the oxygen-side gas-liquid separation apparatus through the first valve, to reduce the liquid level difference; or adjusting the liquid level in the hydrogen-side gas-liquid separation apparatus through the second valve, to reduce the liquid level difference.

Optionally, the system further includes a fifth valve connected between the oxygen-side gas-liquid separation apparatus and the hydrogen-side gas-liquid separation apparatus, where the fifth valve is connected to the safety controller; and the method further includes:
when the liquid level difference is greater than or equal to a second preset liquid-level-difference alarm threshold, controlling, by the safety controller, the fifth valve to close, where the second preset liquid-level-difference alarm threshold is greater than the first preset liquid-level-difference alarm threshold.

According to a third aspect, this application further provides a non-transitory computer-readable storage medium, having a computer program stored therein, where when the program is executed by a processor, the steps of the foregoing method are implemented.

Using the foregoing technical solution, when the hydrogen production parameter is greater than or equal to the preset parameter alarm threshold, the safety controller adjusts the pressure in the oxygen-side gas-liquid separation apparatus through the first valve, and/or adjusts the liquid level in the hydrogen-side gas-liquid separation apparatus through the second valve. In this way, the safety controller not only implements alarm and interlocking functions, but also implements a safety control function. In addition, a control system of the safety controller is independent of a system control loop of the hydrogen-production controller, to prevent a failure in execution of safety control when a system process control loop of the hydrogen-production controller fails, thereby effectively ensuring production safety and improving production efficiency.

Other features and advantages of this application will be described in detail in DETAILED DESCRIPTION below.

The foregoing description is merely an overview of the technical solutions of this application. To understand the technical solutions of this application more clearly, implementation can be performed according to content of the specification. Moreover, to make the foregoing and other objectives, features, and advantages of this application more comprehensible, specific implementations of this application are described below.

### BRIEF DESCRIPTION OF THE DRAWINGS

To describe the technical solutions of the embodiments of this application or the related art more clearly, the following briefly introduces the accompanying drawings required for describing the embodiments or the related art. The accompanying drawings in the following description show some embodiments of this application, and a person of ordinary skill in the art may still derive other drawings from these accompanying drawings without creative efforts.

The accompanying drawings are comprised to provide a further understanding of the present invention and constitute a part of the specification, and are used for explaining the present invention together with the specific implementations below, but are not intended to limit the present invention. In the accompanying drawings:
FIG. 1 is a block diagram of a hydrogen production control system according to an exemplary embodiment of this application;
FIG. 2 is a schematic diagram of a hydrogen production control system according to an exemplary embodiment of this application; and
FIG. 3 is a flowchart of a hydrogen production control method according to an exemplary embodiment of this application.

### DETAILED DESCRIPTION

The following describes the specific implementations of the present disclosure in detail with reference to the accompanying drawings. It should be understood that the specific implementation manners described herein are merely used to describe and explain the present invention but are not intended to limit the present invention.

It should be noted that all actions of obtaining signals, information, or data in the present disclosure are carried out in compliance with relevant data protection regulations and policies corresponding to a country in which the actions are carried out and with authorization given by owners of corresponding apparatuses.

First, an application scenario of the present disclosure is described. The present disclosure is applied to a scenario of hydrogen production control. In this scenario, in an existing control system, a hydrogen-production controller obtains a pressure of an oxygen-side gas-liquid separation apparatus. When the pressure in the oxygen-side gas-liquid separation apparatus is higher than an upper threshold of a preset pressure range, the hydrogen-production controller controls the oxygen-side gas-liquid separation apparatus to vent pressure. Conversely, when the pressure in the oxygen-side gas-liquid separation apparatus is lower than a lower threshold of the preset pressure range, the hydrogen-production controller controls the oxygen-side gas-liquid separation apparatus to increase the pressure. The hydrogen-production controller is further configured to obtain a liquid level difference between a hydrogen-side gas-liquid separation apparatus and the oxygen-side gas-liquid separation apparatus, and when the liquid level difference is out of a preset liquid level difference range, control a liquid level in the hydrogen-side gas-liquid separation apparatus to rise or drop, to maintain the liquid level difference with the oxygen-side gas-liquid separation apparatus within the preset liquid level difference range.

The safety controller is configured to implement alarm and interlocking functions. When the pressure in the oxygen-side gas-liquid separation apparatus in the hydrogen production system is greater than or equal to a preset pressure alarm threshold, or the liquid level difference between the hydrogen-side gas-liquid separation apparatus and the oxygen-side gas-liquid separation apparatus is greater than or equal to a first preset liquid-level-difference alarm threshold, the safety controller cuts off a hydrogen production power supply, and issues alarm information. The preset pressure alarm threshold is greater than an upper limit of the preset pressure range, and the first preset liquid-level-difference alarm threshold is greater than an upper limit of the preset liquid level difference range.

However, it is found by the inventor that, in an existing control system, after the hydrogen production power supply is halted, if the pressure in the oxygen-side gas-liquid separation apparatus is not controlled to fall within the preset pressure range as soon as possible, or the liquid level difference between the hydrogen-side gas-liquid separation apparatus and the oxygen-side gas-liquid separation apparatus is not controlled to fall within the preset liquid level difference range as soon as possible, there is also a risk of liquid mixing between the hydrogen-side gas-liquid separation apparatus and the oxygen-side gas-liquid separation apparatus. Even if the safety controller issues alarm information, related handling personnel may possibly fail to handle it in time, resulting in a production accident.

To prevent a failure in execution of safety control when the system process control loop of the hydrogen-production controller fails, this application provides a hydrogen production control system and method, and a storage medium. The hydrogen production control system includes a safety controller, a first valve and a second valve respectively connected to the safety controller, a hydrogen-production controller, a third valve and a fourth valve respectively connected to the hydrogen-production controller, an oxygen-side gas-liquid separation apparatus respectively in communication with the first valve and the third valve, and a hydrogen-side gas-liquid separation apparatus respectively in communication with the second valve and the fourth valve, where the hydrogen-production controller is configured to control a pressure in the oxygen-side gas-liquid separation apparatus through the third valve, and control a pressure in the hydrogen-side gas-liquid separation apparatus through the fourth valve; and the safety controller is configured to: when a hydrogen production parameter is greater than or equal to a preset parameter alarm threshold, adjust the pressure in the oxygen-side gas-liquid separation apparatus through the first valve, and/or adjust the pressure in the hydrogen-side gas-liquid separation apparatus through the second valve. In this way, the safety controller not only implements alarm and interlocking functions, but also implements a safety control function. In addition, a control system of the safety controller is independent of a system control loop of the hydrogen-production controller, to prevent a failure of a system process control loop of the hydrogen-production controller, thereby effectively ensuring production safety and improving production efficiency.

This application is described below with reference to specific embodiments.

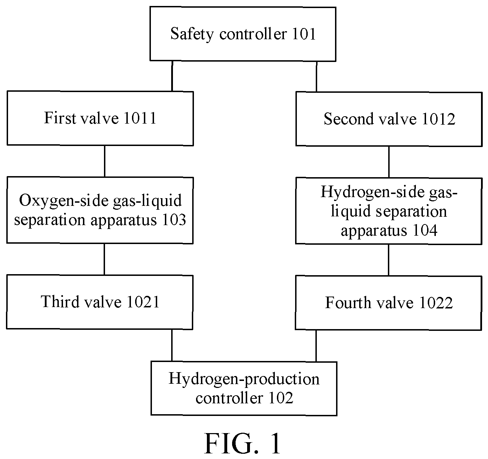

FIG. 1 is a block diagram of a hydrogen production control system according to an exemplary embodiment of this application. As shown in FIG. 1, the system includes: a safety controller 101, a first valve 1011 and a second valve 1012 respectively connected to the safety controller 101, a hydrogen-production controller 102, a third valve 1021 and a fourth valve 1022 respectively connected to the hydrogen-production controller 102, an oxygen-side gas-liquid separation apparatus 103 respectively in communication with the first valve 1011 and the third valve 1021, and a hydrogen-side gas-liquid separation apparatus 104 respectively in communication with the second valve 1012 and the fourth valve 1022.

The hydrogen-production controller 102 is configured to control a pressure in the oxygen-side gas-liquid separation apparatus 103 through the third valve 1021, to cause the pressure in the oxygen-side gas-liquid separation apparatus to be less than a preset pressure alarm threshold; and control a liquid level in the hydrogen-side gas-liquid separation apparatus 104 through the fourth valve 1022, to make a liquid level difference between the oxygen-side gas-liquid separation apparatus 103 and the hydrogen-side gas-liquid separation apparatus 104 less than a first preset liquid-level-difference alarm threshold.

The safety controller 101 is configured to: when a hydrogen production parameter is less than a preset parameter alarm threshold, receive the hydrogen production parameter, and does not participate in hydrogen production control of the system, and the first valve 1011 and the second valve 1012 are both in a closed state.

The safety controller 101 is configured to: when the hydrogen production parameter is greater than or equal to the preset parameter alarm threshold, adjust the pressure in the oxygen-side gas-liquid separation apparatus 103 through the first valve 1011, and/or adjust the liquid level in the hydrogen-side gas-liquid separation apparatus 104 through the second valve 1012.

The hydrogen production parameter includes the pressure in the oxygen-side gas-liquid separation apparatus 103, and the liquid level difference between the oxygen-side gas-liquid separation apparatus 103 and the hydrogen-side gas-liquid separation apparatus 104. When the hydrogen production parameter is the pressure, the pressure in the oxygen-side gas-liquid separation apparatus 103 is adjusted through the first valve 1011, to control the pressure to be less than the preset pressure alarm threshold. When the hydrogen production parameter is the liquid level difference, and a liquid level in the oxygen-side gas-liquid separation apparatus is lower than the liquid level in the hydrogen-side gas-liquid separation apparatus, the pressure in the oxygen-side gas-liquid separation apparatus 103 is adjusted through the first valve 1011. Further, the liquid level in the hydrogen-side gas-liquid separation apparatus 104 may further be adjusted through the fourth valve 1022, to control the liquid level difference to be less than the first preset liquid-level-difference alarm threshold. When the hydrogen production parameter is the liquid level difference, and the liquid level in the oxygen-side gas-liquid separation apparatus is higher than the liquid level in the hydrogen-side gas-liquid separation apparatus, the liquid level in the hydrogen-side gas-liquid separation apparatus 104 is adjusted through the second valve 1012. Further, the pressure in the oxygen-side gas-liquid separation apparatus 103 may further be adjusted through the third valve 1021, to control the liquid level difference to be less than the first preset liquid-level-difference alarm threshold.

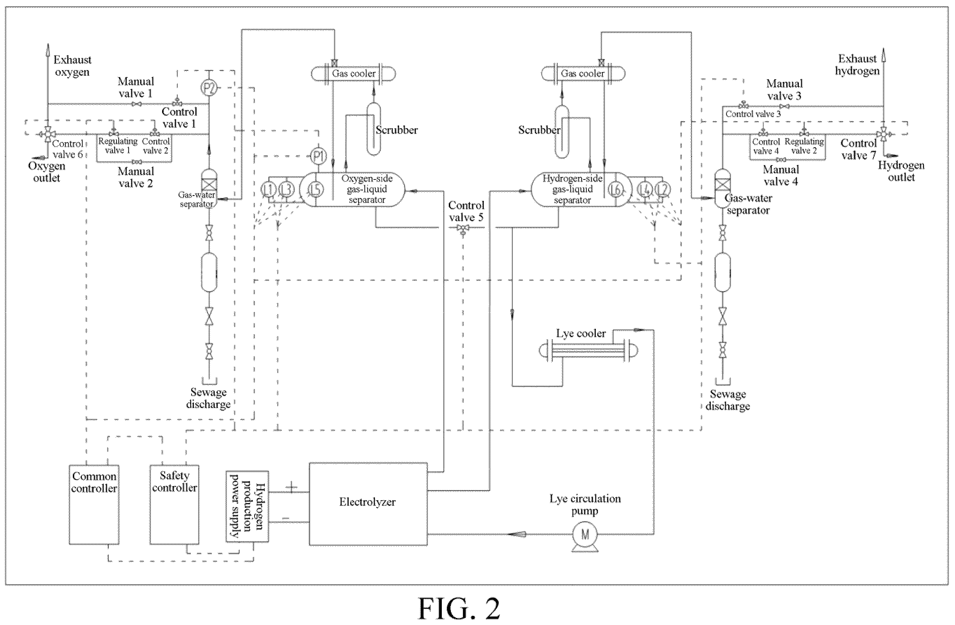

To further describe this application, this application further provides a hydrogen production control system. For example, FIG. 2 is a schematic diagram of a hydrogen production control system according to an exemplary embodiment of this application. As shown in FIG. 2, the hydrogen production control system includes: a common controller (that is, a hydrogen-production controller), a regulating valve 1, a control valve 2, a regulating valve 2, and a control valve 4 respectively connected to the common controller, a safety controller, and a control valve 1, a control valve 3, and a control valve 5 respectively connected to the safety controller. The regulating valve 1 and the control valve 2 form series control, and jointly control a pressure in an oxygen-side gas-liquid separator in parallel with the control valve 1. The regulating valve 2 and the control valve 4 form series control, and jointly control a liquid level in a hydrogen-side gas-liquid separator in parallel with the control valve 3. The common controller is connected to the safety controller, and both the common controller and the safety controller are respectively connected to a power supply, where the power supply is configured to supply power for an electrolyzer. The hydrogen production control system further includes a gas-liquid separation framework. If the gas-liquid separation framework sequentially includes a gas-liquid separator, a scrubber, a gas cooler, and a gas-water separator, the regulating valve and the control valve are in communication with a gas outlet of the gas-water separator. If the gas-liquid separation framework sequentially includes a gas-liquid separator and an integrated scrubber, and the integrated scrubber integrates functions of washing, cooling, and gas-water separation, the regulating valve and the control valve are in communication with a gas outlet of the integrated scrubber.

In addition, the hydrogen production control system further includes one or more liquid level transmitters connected to the oxygen-side gas-liquid separation apparatus, and one or more liquid level transmitters connected to the hydrogen-side gas-liquid separation apparatus. The safety controller is connected to some or all of the liquid level transmitters on the oxygen-side gas-liquid separation apparatus respectively, and is connected to some or all of the liquid level transmitters on the hydrogen-side gas-liquid separation apparatus respectively. The hydrogen-production controller is connected to some or all of the liquid level transmitters on the oxygen-side gas-liquid separation apparatus respectively, and is connected to some or all of the liquid level transmitters on the hydrogen-side gas-liquid separation apparatus respectively.

The plurality of liquid level transmitters connected to the oxygen-side gas-liquid separation apparatus are configured to determine a liquid level in the oxygen-side gas-liquid separation apparatus. The plurality of liquid level transmitters connected to the hydrogen-side gas-liquid separation apparatus are configured to determine the liquid level in the hydrogen-side gas-liquid separation apparatus.

The hydrogen production control system further includes a first pressure transmitter located on the oxygen-side gas-liquid separation apparatus, and a second pressure transmitter located between the first valve and the oxygen-side gas-liquid separation apparatus. The safety controller is connected to at least the second pressure transmitter, and optionally, connected to the first pressure transmitter. The hydrogen-production controller is connected to at least the first pressure transmitter, and optionally, connected to the second pressure transmitter.

For example, L1, L2, and L3 are respectively liquid level transmitters connected to the oxygen-side gas-liquid separator, and are configured to obtain a liquid level in the oxygen-side gas-liquid separator, L4, L5, and L6 are respectively liquid level transmitters connected to the hydrogen-side gas-liquid separator, and are configured to obtain a liquid level in the hydrogen-side gas-liquid separator, and P1 and P2 are pressure transmitters, and are configured to obtain a gas pressure in the oxygen-side gas-liquid separator. In addition, the foregoing liquid level transmitters and pressure transmitters are respectively connected to the common controller and the safety controller.

A plurality of liquid level transmitters and pressure transmitters are arranged to prevent a possible failure of a single liquid level transmitter or pressure transmitter, and obtain an accurate pressure and an accurate liquid level difference when any liquid level transmitter or pressure transmitter fails. A quantity of the liquid level transmitters and a quantity of the pressure transmitters may be set based on an actual requirement, and are not limited in this application.

In a possible implementation, the hydrogen production parameter includes the pressure in the oxygen-side gas-liquid separation apparatus 103. The hydrogen-production controller 102 is configured to: when the pressure in the oxygen-side gas-liquid separation apparatus 103 is greater than or equal to a preset pressure alarm threshold, control the system to halt hydrogen production. For example, as shown in FIG. 2, the system may be controlled, in a manner of controlling the power supply to halt supplying power to the electrolyzer, to halt hydrogen production. The safety controller 101 is configured to: when the pressure in the oxygen-side gas-liquid separation apparatus 103 is greater than or equal to the preset pressure alarm threshold, control, in an interlocking manner, the system to halt hydrogen production, which, for example, may be that after being interlocked with the common controller, the safety controller 101 controls, in a manner of controlling the power supply to halt supplying power to the electrolyzer, the system to halt hydrogen production, and adjusts the pressure in the oxygen-side gas-liquid separation apparatus 103 through the first valve 1011, to depressurize the oxygen-side gas-liquid separation apparatus 103. As shown in FIG. 2, the safety controller can control the control valve 1 to open, to depressurize the oxygen-side gas-liquid separator.

For example, when the pressure obtained by the pressure transmitter is greater than or equal to the preset pressure alarm threshold, and the liquid level difference falls within the preset liquid level difference range, it represents that one or more of the regulating valve 1, the control valve 2, and the control valve 6 fail. Therefore, the common controller may control the power supply to be turned off and the system to halt hydrogen production. The safety controller is interlocked with the common controller to halt hydrogen production, issues alarm information, and controls the control valve 1 to open to vent pressure, to control the pressure in the oxygen-side gas-liquid separator to fall within the preset pressure range, and may further control, when the pressure in the oxygen-side gas-liquid separator falls within the preset pressure range, the power supply to be turned on to continue hydrogen production.

**In** addition, because the liquid level difference between the hydrogen-side gas-liquid separation apparatus 104 and the oxygen-side gas-liquid separation apparatus 103 needs to be maintained within the preset liquid level difference range. Therefore, the hydrogen-production controller 102 is further configured to: when the pressure in the oxygen-side gas-liquid separation apparatus 103 is greater than or equal to the preset pressure alarm threshold, adjust the pressure in the hydrogen-side gas-liquid separation apparatus 104 through the fourth valve 1022, to cause the liquid level difference between the oxygen-side gas-liquid separation apparatus 103 and the hydrogen-side gas-liquid separation apparatus 104 to fall within the preset liquid level difference range. As shown in FIG. 2, an opening of the regulating valve 2 may be reduced, or the control valve 4 may be closed, to increase a gas pressure in the hydrogen-side gas-liquid separator, to maintain the liquid level difference within the preset liquid level difference range.

It should be noted that the first valve 1011 and the second valve 1012 may be regulating valves, so that the safety controller 101 controls an opening of the first valve 1011, to further control the pressure in the oxygen-side gas-liquid separation apparatus 103. The regulating valve may be a diaphragm regulating valve, an electric regulating valve, or a pneumatic regulating ball valve, and there may be one or more regulating valves. Alternatively, the first valve 1011 may be a manual valve and a control valve, and the second valve 1012 may be a manual valve and a control valve. The control valve is connected to the safety controller 101, is configured to accept control from the safety controller 101 to open or close, and may be a stop valve, a switch valve, or the like. The manual valve is configured to vent pressure based on a preset opening.

In this way, when the pressure in the oxygen-side gas-liquid separation apparatus is greater than or equal to the preset pressure alarm threshold, the safety controller may control the first valve to depressurize the oxygen-side gas-liquid separation apparatus, and ensure that the liquid level difference between the hydrogen-side gas-liquid separation apparatus and the oxygen-side gas-liquid separation apparatus falls within the preset liquid level difference range, to prevent liquid mixing, which improves the safety of the hydrogen production system, and helps ensure the production safety and improve the production efficiency.

In another possible implementation, the hydrogen production parameter further includes a liquid level difference between the oxygen-side gas-liquid separation apparatus 103 and the hydrogen-side gas-liquid separation apparatus 104. The hydrogen-production controller 102 is configured to: when the liquid level difference is greater than or equal to a first preset liquid-level-difference alarm threshold, control the system to halt hydrogen production. For example, as shown in FIG. 2, the system may be controlled, in a manner of controlling the power supply to halt supplying power to the electrolyzer, to halt hydrogen production. The safety controller 101 is configured to: when the liquid level difference is greater than or equal to the first preset liquid-level-difference alarm threshold, control, in an interlocking manner, the system to halt hydrogen production, and adjust the pressure in the oxygen-side gas-liquid separation apparatus 103 through the first valve 1011, to reduce the liquid level difference, where as shown in FIG. 2, the safety controller opens the control valve 1 to depressurize the oxygen-side gas-liquid separator and raise the liquid level in the oxygen-side gas-liquid separator, to reduce the liquid level difference; or adjust the liquid level in the hydrogen-side gas-liquid separation apparatus 104 through the second valve 1012, to reduce the liquid level difference, where as shown in FIG. 2, the safety controller opens the control valve 3 to depressurize the hydrogen-side gas-liquid separator and raise the liquid level in the hydrogen-side gas-liquid separator, to reduce the liquid level difference. In addition, to control the liquid level difference to fall within the preset liquid level difference range as soon as possible, the hydrogen-production controller is further configured to: when the liquid level difference is greater than or equal to the first preset liquid-level-difference alarm threshold, adjust the pressure in the oxygen-side gas-liquid separation apparatus through the third valve, to reduce the liquid level difference.

For example, the liquid level difference represents the liquid level in the hydrogen-side gas-liquid separation apparatus 104 minus the liquid level in the oxygen-side gas-liquid separation apparatus 103. When the liquid level difference is greater than or equal to the first preset liquid-level-difference alarm threshold, it represents that the liquid level in the hydrogen-side gas-liquid separation apparatus 104 is excessively high, the pressure therein is small, and the fourth valve 1022 fails and cannot increase the pressure in the hydrogen-side gas-liquid separation apparatus 104. Therefore, to maintain the liquid level difference within the preset liquid level difference range, as shown in FIG. 2, the safety controller may open the control valve 1 to depressurize the oxygen-side gas-liquid separator, to be specific, the safety controller 101 controls the first valve 1011 to open to depressurize the oxygen-side gas-liquid separation apparatus 103. In addition, to increase an adjustment speed for liquid level balance, as shown in FIG. 2, the common controller may further increase an opening of the regulating valve 1, to be specific, the hydrogen-production controller 102 is further configured to: when the liquid level difference is greater than or equal to the first preset liquid-level-difference alarm threshold, control the third valve 1021 to increase the opening to depressurize the oxygen-side gas-liquid separation apparatus 103, to reduce the liquid level difference.

Alternatively, the liquid level difference represents the liquid level in the oxygen-side gas-liquid separation apparatus 103 minus the liquid level in the hydrogen-side gas-liquid separation apparatus 104. When the liquid level difference is greater than or equal to the first preset liquid-level-difference alarm threshold, it represents that the liquid level in the hydrogen-side gas-liquid separation apparatus 104 is excessively low, the pressure therein is large, and the fourth valve 1022 fails and cannot reduce the pressure in the hydrogen-side gas-liquid separation apparatus 104. Therefore, to maintain the liquid level difference within the preset liquid level difference range, as shown in FIG. 2, the safety controller may control the control valve 3 to open to depressurize hydrogen-side gas-liquid separator, to be specific, the safety controller 101 controls the second valve 1012 to open to depressurize the hydrogen-side gas-liquid separation apparatus 104. In addition, to increase an adjustment speed for liquid level balance, the hydrogen-production controller 102 may control the third valve 1021 to reduce the opening to increase the pressure in the oxygen-side gas-liquid separation apparatus 103.

In this way, when the liquid level difference is greater than or equal to the first preset liquid-level-difference alarm threshold, the safety controller adjusts the pressure in the oxygen-side gas-liquid separation apparatus through the first valve, to reduce the liquid level difference, or adjusts the pressure in the hydrogen-side gas-liquid separation apparatus through the second valve, to reduce the liquid level difference, to ensure that the liquid level difference between the hydrogen-side gas-liquid separation apparatus and the oxygen-side gas-liquid separation apparatus falls within the preset liquid level difference range, to prevent liquid mixing, which improves the safety of the hydrogen production system, and helps ensure the production safety and improve the production efficiency.

In still another possible implementation, the hydrogen production system further includes a fifth valve 105 connected between the oxygen-side gas-liquid separation apparatus 103 and the hydrogen-side gas-liquid separation apparatus 104, where the fifth valve 105 is connected to the safety controller 101. The safety controller 101 is configured to: when the liquid level difference is greater than or equal to a second preset liquid-level-difference alarm threshold, control the fifth valve 105 to close, where the second preset liquid-level-difference alarm threshold is greater than the first preset liquid-level-difference alarm threshold.

For example, the fifth valve 105 may be a control valve. In a normal working state of the hydrogen production system, the control valve is in an open state, so that the hydrogen production system can perform hydrogen production. When the liquid level difference is greater than or equal to a second preset liquid-level-difference alarm threshold, the control valve is in a closed state, to cut off communication between the oxygen-side gas-liquid separation apparatus 103 and the hydrogen-side gas-liquid separation apparatus 104. In this way, liquid mixing can be completely avoided, thereby improving safety of the hydrogen production system. The control valve may be a conventional switch valve in the art.

In another example, the hydrogen production parameter includes the pressure and the liquid level difference. To be specific, when the pressure is greater than or equal to the preset pressure alarm threshold, and the liquid level difference is greater than or equal to the first preset liquid-level-difference alarm threshold, it represents that a control loop in which the hydrogen-production controller is located may be completely out of control. The safety controller 101 can control the power supply to halt outputting a hydrogen production current, and the system halts hydrogen production. The first valve 1011 is opened to depressurize the oxygen-side gas-liquid separation apparatus 103, and the second valve 1012 is opened to depressurize the hydrogen-side gas-liquid separation apparatus 104, to maintain the liquid level difference within the preset liquid level difference range. As shown in FIG. 2, the safety controller opens the control valve 1 and the control valve 3, and depressurize the oxygen-side gas-liquid separator and the hydrogen-side gas-liquid separator, to cause the pressure in the oxygen-side gas-liquid separator to fall within the preset pressure range, and the liquid level difference between oxygen-side gas-liquid separator and the hydrogen-side gas-liquid separator to fall within the preset liquid level difference range. Further, to prevent liquid mixing, the safety controller 101 may further control the fifth valve 105 to close, to ensure safety of the system.

Using the foregoing system, when the hydrogen production parameter is greater than or equal to the preset parameter alarm threshold, the pressure in the oxygen-side gas-liquid separation apparatus is adjusted through the first valve, and/or the liquid level in the hydrogen-side gas-liquid separation apparatus is adjusted through the second valve. In this way, the safety controller not only implements alarm and interlocking functions, but also implements a safety control function. In addition, a control system of the safety controller is independent of a system control loop of the hydrogen-production controller, to prevent a failure of a system process control loop of the hydrogen-production controller, thereby effectively ensuring production safety and improving production efficiency.

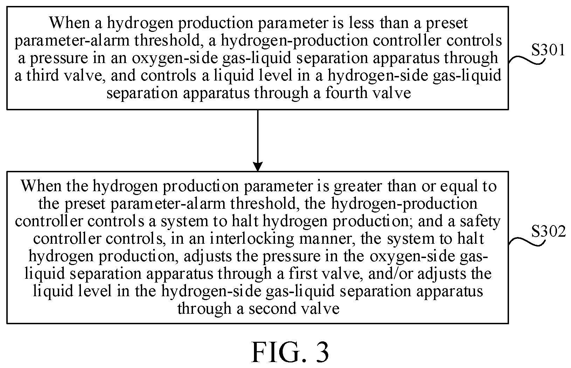

FIG. 3 shows a hydrogen production control method according to an exemplary embodiment of this application. As shown in FIG. 3, the method is applicable to a hydrogen production control system shown in FIG. 1. The hydrogen production control system includes a safety controller, a first valve and a second valve respectively connected to the safety controller, a hydrogen-production controller, a third valve and a fourth valve respectively connected to the hydrogen-production controller, an oxygen-side gas-liquid separation apparatus respectively in communication with the first valve and the third valve, and a hydrogen-side gas-liquid separation apparatus respectively in communication with the second valve and the fourth valve. The method includes:
S301: When a hydrogen production parameter is greater than or equal to a preset parameter alarm threshold, the hydrogen-production controller adjusts a pressure in the oxygen-side gas-liquid separation apparatus through the third valve, and/or adjust a liquid level in the hydrogen-side gas-liquid separation apparatus through the fourth valve.

For example, the hydrogen-production controller controls the pressure in the oxygen-side gas-liquid separation apparatus through the third valve, to cause the pressure in the oxygen-side gas-liquid separation apparatus to be less than a preset pressure alarm threshold; and controls the liquid level in the hydrogen-side gas-liquid separation apparatus through the fourth valve, to cause a liquid level difference between the oxygen-side gas-liquid separation apparatus and the hydrogen-side gas-liquid separation apparatus to be less than a first preset liquid-level-difference alarm threshold. The safety controller is configured to receive the hydrogen production parameter, the first valve and the second valve are in a closed state, and the hydrogen production parameter includes the pressure in the oxygen-side gas-liquid separation apparatus and the liquid level difference between the oxygen-side gas-liquid separation apparatus and the hydrogen-side gas-liquid separation apparatus.

For example, the oxygen-side gas-liquid separation apparatus may be depressurized by adjusting an opening of the third valve. Alternatively, the hydrogen-side gas-liquid separation apparatus may be depressurized by adjusting an opening of the fourth valve.

S302: When the hydrogen production parameter is greater than or equal to the preset parameter alarm threshold, the hydrogen-production controller controls the system to halt hydrogen production; and the safety controller controls, in an interlocking manner, the system to halt hydrogen production, adjusts the pressure in the oxygen-side gas-liquid separation apparatus through the first valve, and/or adjusts the liquid level in the hydrogen-side gas-liquid separation apparatus through the second valve.

For example, the first valve may be controlled to open, to depressurize the oxygen-side gas-liquid separation apparatus. Alternatively, the second valve may be controlled to open, to depressurize the hydrogen-side gas-liquid separation apparatus.

Optionally, the hydrogen production parameter includes the pressure in the oxygen-side gas-liquid separation apparatus. The method further includes:
when the pressure in the oxygen-side gas-liquid separation apparatus is greater than or equal to the preset pressure alarm threshold, controlling, by the hydrogen-production controller, the system to halt hydrogen production, where, for example, the hydrogen-production controller may control a power supply to be turned off, and the system halts hydrogen production.

When the pressure in the oxygen-side gas-liquid separation apparatus is greater than or equal to the preset pressure alarm threshold, the safety controller controls, in an interlocking manner, the system to halt hydrogen production, and adjusts the pressure in the oxygen-side gas-liquid separation apparatus through the first valve, to depressurize the oxygen-side gas-liquid separation apparatus.

For example, the safety controller may control the first valve to open, to depressurize the oxygen-side gas-liquid separation apparatus.

Optionally, the method further includes:
when the pressure in the oxygen-side gas-liquid separation apparatus is greater than or equal to the preset pressure alarm threshold, adjusting, by the hydrogen-production controller in an interlocking manner, the pressure in the hydrogen-side gas-liquid separation apparatus through the fourth valve, to cause a liquid level difference between the oxygen-side gas-liquid separation apparatus and the hydrogen-side gas-liquid separation apparatus to fall within a preset liquid level difference range.

For example, the hydrogen-production controller may increase the pressure in the hydrogen-side gas-liquid separation apparatus by reducing an opening of the fourth valve, to cause the liquid level difference between the oxygen-side gas-liquid separation apparatus and the hydrogen-side gas-liquid separation apparatus to fall within the preset liquid level difference range.

Optionally, the hydrogen production parameter further includes a liquid level difference between the oxygen-side gas-liquid separation apparatus and the hydrogen-side gas-liquid separation apparatus. The method further includes:
when the liquid level difference is greater than or equal to the first preset liquid-level-difference alarm threshold, controlling, by the hydrogen-production controller, the system to halt hydrogen production; and
when the liquid level difference is greater than or equal to the first preset liquid-level-difference alarm threshold, controlling, by the safety controller in an interlocking manner, the system to halt hydrogen production, and adjusting the pressure in the oxygen-side gas-liquid separation apparatus through the first valve, to reduce the liquid level difference; or adjusting the liquid level in the hydrogen-side gas-liquid separation apparatus through the second valve, to reduce the liquid level difference.

For example, the safety controller may control the first valve to open, to depressurize the oxygen-side gas-liquid separation apparatus, to reduce the liquid level difference. Alternatively, the safety controller may control the second valve to open, to depressurize the hydrogen-side gas-liquid separation apparatus, to reduce the liquid level difference.

Optionally, the method further includes:
when the liquid level difference is greater than or equal to the first preset liquid-level-difference alarm threshold, adjusting, by the hydrogen-production controller, the pressure in the oxygen-side gas-liquid separation apparatus through the third valve, to reduce the liquid level difference.

For example, when the liquid level in the hydrogen-side gas-liquid separation apparatus is excessively high, the hydrogen-production controller may reduce the pressure in the oxygen-side gas-liquid separation apparatus by increasing the opening of the third valve, to raise the liquid level and reduce the liquid level difference. Alternatively, when the liquid level in the oxygen-side gas-liquid separation apparatus is excessively high, the hydrogen-production controller may increase the pressure in the oxygen-side gas-liquid separation apparatus by reducing the opening of the third valve, to lower the liquid level and reduce the liquid level difference.

Optionally, the system further includes a fifth valve connected between the oxygen-side gas-liquid separation apparatus and the hydrogen-side gas-liquid separation apparatus, where the fifth valve is connected to the safety controller. The method further includes:
when the liquid level difference is greater than or equal to a second preset liquid-level-difference alarm threshold, controlling, by the safety controller, the fifth valve to close, where the second preset liquid-level-difference alarm threshold is greater than the first preset liquid-level-difference alarm threshold.

Using the foregoing method, when the hydrogen production parameter is greater than or equal to the preset parameter alarm threshold, the pressure in the oxygen-side gas-liquid separation apparatus is adjusted through the first valve, and/or the liquid level in the hydrogen-side gas-liquid separation apparatus is adjusted through the second valve. **In** this way, the safety controller not only implements alarm and interlocking functions, but also implements a safety control function. **In** addition, a control system of the safety controller is independent of a system control loop of the hydrogen-production controller, to prevent a failure of a system process control loop of the hydrogen-production controller, thereby effectively ensuring production safety and improving production efficiency.

The preferred implementations of the present disclosure are described in detail above with reference to the accompanying drawings. However, the present disclosure is not limited to the specific details in the foregoing implementations, a plurality of simple deformations may be made to the technical solution of the present disclosure within a range of the technical concept of the present disclosure, and these simple deformations fall within the protection scope of the present disclosure.

In addition, it should be noted that, the specific technical features described in the above specific implementations may be combined in any suitable manner without contradiction. To avoid unnecessary repetition, various possible combinations are not further described in the present disclosure.

In addition, the various implementations of the present disclosure may be combined arbitrarily as long as it does not deviate from the idea of the present disclosure, and the combination should also be regarded as the contents of the present invention.

## Claims

1. A hydrogen production control system, comprising a safety controller, a first valve and a second valve respectively connected to the safety controller, a hydrogen-production controller, a third valve and a fourth valve respectively connected to the hydrogen-production controller, an oxygen-side gas-liquid separation apparatus respectively in communication with the first valve and the third valve, and a hydrogen-side gas-liquid separation apparatus respectively in communication with the second valve and the fourth valve, wherein
the hydrogen-production controller is configured to control a pressure in the oxygen-side gas-liquid separation apparatus through the third valve, and control a liquid level in the hydrogen-side gas-liquid separation apparatus through the fourth valve; and
the safety controller is configured to: when a hydrogen production parameter is greater than or equal to a preset parameter alarm threshold, adjust the pressure in the oxygen-side gas-liquid separation apparatus through the first valve, and/or adjust the liquid level in the hydrogen-side gas-liquid separation apparatus through the second valve.

2. The system according to claim 1, wherein the hydrogen production parameter comprises the pressure in the oxygen-side gas-liquid separation apparatus;
the hydrogen-production controller is configured to: when the pressure in the oxygen-side gas-liquid separation apparatus is greater than or equal to a preset pressure alarm threshold, control the system to halt hydrogen production; and
the safety controller is configured to: when the pressure in the oxygen-side gas-liquid separation apparatus is greater than or equal to the preset pressure alarm threshold, control, in an interlocking manner, the system to halt hydrogen production, and adjust the pressure in the oxygen-side gas-liquid separation apparatus through the first valve, to depressurize the oxygen-side gas-liquid separation apparatus.

3. The system according to claim 1 or 2, wherein the hydrogen production control system further comprises a first pressure transmitter located on the oxygen-side gas-liquid separation apparatus, and a second pressure transmitter located between the first valve and the oxygen-side gas-liquid separation apparatus, wherein the safety controller is connected to at least the second pressure transmitter, and optionally, connected to the first pressure transmitter; and the hydrogen-production controller is connected to at least the first pressure transmitter, and optionally, connected to the second pressure transmitter.

4. The system according to claim 1, wherein the hydrogen production parameter further comprises a liquid level difference between the oxygen-side gas-liquid separation apparatus and the hydrogen-side gas-liquid separation apparatus;
the hydrogen-production controller is configured to: when the liquid level difference is greater than or equal to a first preset liquid-level-difference alarm threshold, control the system to halt hydrogen production; and
the safety controller is configured to: when the liquid level difference is greater than or equal to the first preset liquid-level-difference alarm threshold, control, in an interlocking manner, the system to halt hydrogen production, and adjust the pressure in the oxygen-side gas-liquid separation apparatus through the first valve, to reduce the liquid level difference; or adjust the liquid level in the hydrogen-side gas-liquid separation apparatus through the second valve, to reduce the liquid level difference.

5. The system according to claim 1 or 4, wherein the hydrogen production control system further comprises one or more liquid level transmitters connected to the oxygen-side gas-liquid separation apparatus, and one or more liquid level transmitters connected to the hydrogen-side gas-liquid separation apparatus; the safety controller is connected to some or all of the liquid level transmitters on the oxygen-side gas-liquid separation apparatus respectively, and is connected to some or all of the liquid level transmitters on the hydrogen-side gas-liquid separation apparatus respectively; and the hydrogen-production controller is connected to some or all of the liquid level transmitters on the oxygen-side gas-liquid separation apparatus respectively, and is connected to some or all of the liquid level transmitters on the hydrogen-side gas-liquid separation apparatus respectively;
the plurality of liquid level transmitters connected to the oxygen-side gas-liquid separation apparatus are configured to determine a liquid level in the oxygen-side gas-liquid separation apparatus; and
the plurality of liquid level transmitters connected to the hydrogen-side gas-liquid separation apparatus are configured to determine the liquid level in the hydrogen-side gas-liquid separation apparatus.

6. The system according to claim 1, wherein the system further comprises a fifth valve connected between the oxygen-side gas-liquid separation apparatus and the hydrogen-side gas-liquid separation apparatus, wherein the fifth valve is connected to the safety controller.

7. The system according to claim 6, wherein the hydrogen production parameter further comprises a liquid level difference between the oxygen-side gas-liquid separation apparatus and the hydrogen-side gas-liquid separation apparatus; and
the safety controller is configured to: when the liquid level difference is greater than or equal to a second preset liquid-level-difference alarm threshold, control the fifth valve to close, wherein the second preset liquid-level-difference alarm threshold is greater than the first preset liquid-level-difference alarm threshold.

8. A hydrogen production control method, applicable to a hydrogen production control system, comprising a safety controller, a first valve and a second valve respectively connected to the safety controller, a hydrogen-production controller, a third valve and a fourth valve respectively connected to the hydrogen-production controller, an oxygen-side gas-liquid separation apparatus respectively in communication with the first valve and the third valve, and a hydrogen-side gas-liquid separation apparatus respectively in communication with the second valve and the fourth valve, wherein the method comprises:
controlling, by the hydrogen-production controller, a pressure in the oxygen-side gas-liquid separation apparatus through the third valve when a hydrogen production parameter is less than a preset parameter alarm threshold, to cause the pressure in the oxygen-side gas-liquid separation apparatus to be less than a preset pressure alarm threshold; and controlling a liquid level in the hydrogen-side gas-liquid separation apparatus through the fourth valve, to cause a liquid level difference between the oxygen-side gas-liquid separation apparatus and the hydrogen-side gas-liquid separation apparatus to be less than a first preset liquid-level-difference alarm threshold, wherein the safety controller is configured to receive the hydrogen production parameter, the first valve and the second valve are in a closed state, and the hydrogen production parameter comprises the pressure in the oxygen-side gas-liquid separation apparatus and the liquid level difference between the oxygen-side gas-liquid separation apparatus and the hydrogen-side gas-liquid separation apparatus; and
when the hydrogen production parameter is greater than or equal to the preset parameter alarm threshold, controlling, by the hydrogen-production controller, the system to halt hydrogen production; and controlling, by the safety controller in an interlocking manner, the system to halt hydrogen production, adjusting the pressure in the oxygen-side gas-liquid separation apparatus through the first valve, and/or adjusting the liquid level in the hydrogen-side gas-liquid separation apparatus through the second valve.

9. The method according to claim 8, wherein the hydrogen production parameter comprises the pressure in the oxygen-side gas-liquid separation apparatus; and the method further comprises:
when the pressure in the oxygen-side gas-liquid separation apparatus is greater than or equal to the preset pressure alarm threshold, controlling, by the hydrogen production controller, the system to halt hydrogen production; and
when the pressure in the oxygen-side gas-liquid separation apparatus is greater than or equal to the preset pressure alarm threshold, controlling, by the safety controller in an interlocking manner, the system to halt hydrogen production, and adjusting the pressure in the oxygen-side gas-liquid separation apparatus through the first valve, to depressurize the oxygen-side gas-liquid separation apparatus.

10. The method according to claim 8, wherein the hydrogen production parameter further comprises the liquid level difference between the oxygen-side gas-liquid separation apparatus and the hydrogen-side gas-liquid separation apparatus; and the method further comprises:
when the liquid level difference is greater than or equal to the first preset liquid-level-difference alarm threshold, controlling, by the hydrogen-production controller, the system to halt hydrogen production; and
when the liquid level difference is greater than or equal to the first preset liquid-level-difference alarm threshold, controlling, by the safety controller in an interlocking manner, the system to halt hydrogen production, and adjusting the pressure in the oxygen-side gas-liquid separation apparatus through the first valve, to reduce the liquid level difference; adjusting the liquid level in the hydrogen-side gas-liquid separation apparatus through the second valve, to reduce the liquid level difference.

11. The method according to claim 8, wherein the system further comprises a fifth valve connected between the oxygen-side gas-liquid separation apparatus and the hydrogen-side gas-liquid separation apparatus, wherein the fifth valve is connected to the safety controller; and the method further comprises:
when the liquid level difference is greater than or equal to a second preset liquid-level-difference alarm threshold, controlling, by the safety controller, the fifth valve to close, wherein the second preset liquid-level-difference alarm threshold is greater than the first preset liquid-level-difference alarm threshold.

12. A non-transitory computer-readable storage medium, having a computer program stored therein, wherein when the program as executed by a processor, the steps of the method according to any one of claims 8 to 11 are implemented.
